# EUROPEAN PATENT APPLICATION

(11) **EP 2 407 905 A1**
(43) Date of publication of application: **18.01.2012**
(21) Application number: 10194863.6
(22) Date of filing: 14.12.2010
(51) Int. Cl.: G06F 21/00

(54) **Encryption flash disk**

(30) Priority: 12.07.2010 TW 099122865
(71) Applicant: Walton Advanced Engineering Inc., Kaohsiung City 806 (TW)
(72) Inventor: Yu, Hong-Chi, 806, Kaohsiung City (TW); Chang, Mao-Ting, 806, Kaohsiung City (TW)
(74) Representative: Viering, Jentschura & Partner

(57) **Abstract**

An encryption flash disk comprises a memory module, an encryption system, and a switch device wherein the memory module has a substrate accommodating an inner surface provided with a memory chip as well as a control device at least and a plurality of metal contacts; the encryption system is installed in the memory chip electrically connected to the control device and comprises a public zone and a private zone at least and a public program wherein the public program has a password configure module used to configure, input, and clear a password; the switch device is electrically connected to the memory module's control device. Accordingly, the encryption flash disk is capable of keeping digital data secret and safe.

## Description

### BACKGROUND OF THE INVENTION

### 1) FIELD OF THE INVENTION

The present invention relates to a storage device, especially to an encryption flash disk structure embodying a data encryption function via a switch key.

### 2) DESCRIPTION OF THE PRIOR ART

Prosperous information and progressive technologies have embodied more and more digital data stored in various storage devices such as USB flash disk and mobile hard disk wherein the USB flash disk with advantages like handiness, portability, and plug-and-play is the most popular with the general public.

However, being short of a function to conceal digital data, a conventional USB flash disk with a problem of digital data easily stolen may allow its digital data or even trade secrets to be exposed in case of the disk held by other people.

### SUMMARY OF THE INVENTION

For the purpose of solving the said problem, the principal object of the present invention is to provide an encryption flash disk comprising a memory module, an encryption system, and a switch device wherein the memory module has both a substrate accommodating an inner surface provided with a memory chip as well as a control device at least and a plurality of metal contacts; the encryption system is installed into the memory chip electrically connected to the control device and comprises a public zone at least used to store public digital data, a private zone at least used to store private digital data, and a public program with a password configure module used to configure, input, and clear a password; the switch device is electrically connected to the memory module's control device. Accordingly, the encryption system's private zone is enabled or disabled with the control device electrically connected to the switch device; the switch device at the "OFF" status is able to turn off electric signals of the private zone when the switch device is directly electrically connected to the memory chip's private zone. Therefore, the present invention is capable of keeping digital data secret and safe without worry about potential exposure of digital data in one data disk held by another person.

To reach the above purposes, the present invention has the principal technical measures embodied with the following techniques. As one encryption flash disk to encrypt and access digital data via an operating system, the present invention comprises a memory module, an encryption system, and a switch device wherein the memory module has both a substrate accommodating an inner surface provided with a memory chip as well as a control device at least and a plurality of metal contacts electrically connected to the memory chip and the control device via the substrate; the encryption system which is installed in the memory chip electrically connected to the control device comprises a public zone at least used to store public digital data, a private zone at least used to store private digital data, and a public program with a password configure module to configure, input, and clear a password; the switch device is electrically connected to the memory module's control device.

The purposes and the technical issues with respect to the present invention are further embodied with the following technical measures.

The said encryption flash disk has the switch device electrically connected to the memory chip's private zone.

The said encryption flash disk has the password configure module exported to an electronic data exchange device via a password configure interface.

The said encryption flash disk has the metal contacts compatible to one of the following data transfer interfaces at least such as Universal Serial Bus (USB), Mini Universal Serial Bus (Mini USB), Micro Universal Serial Bus (Micro USB), or External Serial Advanced Technology Attachment (e-SATA).

The said encryption flash disk has the substrate's inner surface to be formed as an electronics body encasing the memory chip and the control device.

The said encryption flash disk has the memory module accommodated inside a case with the metal contacts exposed and the switch device installed on one side of the case.

In contrast to the prior arts, the present invention is effective in keeping digital data secret and safe without worry about potential exposure of digital data in one data disk held by another person.

### BRIEF DESCRIPTIONS OF THE DRAWINGS

FIG. 1 is the sectional view of the present invention of a combinational encryption flash disk structure.
FIG. 2 is the block diagram of components in the first embodiment for the present invention of an encryption flash disk and its method.
FIG. 3 is the perspective view of the present invention of an encryption flash disk.
FIG. 4 is the block diagram of components in the second embodiment for the present invention of an encryption flash disk and its method.

### DETAILED DESCRIPTIONS OF THE PREFERRED EMBODIMENTS

For objects, characteristics, and effects obviously and easily understood, the preferred embodiments of the present invention are particularly interpreted as follows:

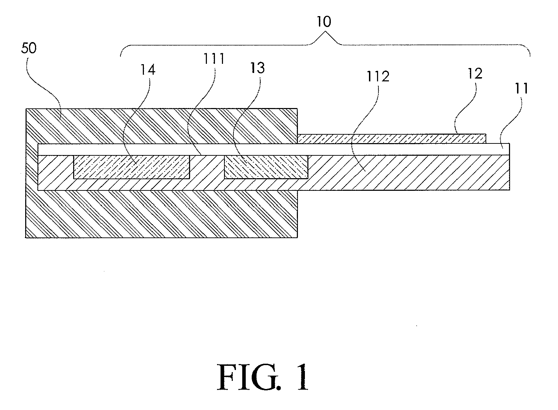

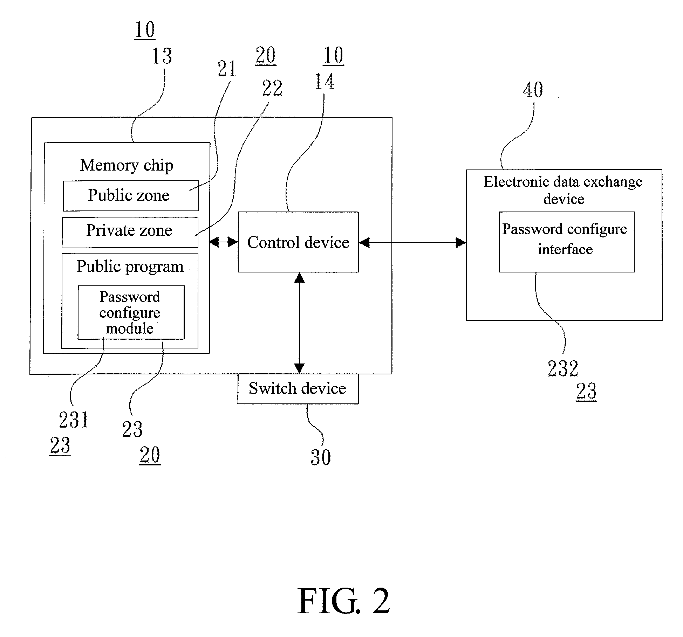

FIGS. 1, 2, and 3 illustrate the first embodiment for the present invention of an encryption flash disk encrypting and accessing digital data via an operating system. With reference to FIGS. 1, 2, and 3, the present invention of an encryption flash disk comprises a memory module (10), an encryption system (20), and a switch device (30). The memory module (10) has a substrate (11) and a plurality of metal contacts (12) wherein the substrate (11) accommodates an inner surface (111) provided with a memory chip (13) and a control device (14) at least which are electrically connected to the substrate (11) by wire bonding or a flip chip technique. In addition, the metal contacts (12) are electrically connected to the memory chip (13) and the control device (14) via the substrate (11). In practice, the metal contacts (12) are compatible to one of the following data transfer interfaces at least such as Universal Serial Bus (USB), Mini Universal Serial Bus (Mini USB), Micro Universal Serial Bus (Micro USB), or External Serial Advanced Technology Attachment (e-SATA).

The encryption system (20) which is installed in the memory chip (13) electrically connected to the control device (14) comprises a public zone (21) as well as a private zone (22) at least and a public program (23) wherein the public zone (21) is used to store public digital data, the private zone (22) is used to store private digital data, and the public program (23) has a password configure module (231) to configure, input, and clear a password. In practice, the password configure module (231) is exported to an electronic data exchange device (40) via a password configure interface (232) wherein the electronic data exchange device includes but is not limited to a personal computer, a Personal Digital Assistant (PDA), a laptop, a digital camera, or a printer.

The switch device (30) is electrically connected to the control device (14) of the memory module (10).

In practice, the private zone (22) of the encryption system (20) enabled or disabled in this embodiment is embodied with the control device (14) electrically connected to the switch device (30).

In detail, when the metal contacts (12) are connected to a data transmission interface's corresponding slot of the electronic data exchange device (40), then the switch device (30) is configured to the "ON" status, the control device (14) subject to the "ON" command displays the password configure interface (232) on an electronic data exchange device via the password configure module (231) of the public program (23) and a user's correct password enables the private zone (22) in which a user is able to access, delete, add, or modify digital data. On the contrary, a user is unable to enable the private zone (22) but access, delete, add, or modify digital data saved in the public zone (21) only in the event of the switch device (30) at the "OFF" status.

Preferably, the inner surface (111) of the substrate (11) forms an electronics body (112) encasing the memory chip (13) and the control device (14) wherein the electronics body (112) is a polymeric material such as epoxy compound.

Preferably, the memory module (10) is also accommodated in a case (50) with the metal contacts (12) exposed, and the switch device (30) is installed on and exposed to one side of the case (50) in this embodiment. In addition to the case (50) installed to prevent the memory module (10) from collision, the switch device (30) is provided to facilitate a user's operation of the present invention.

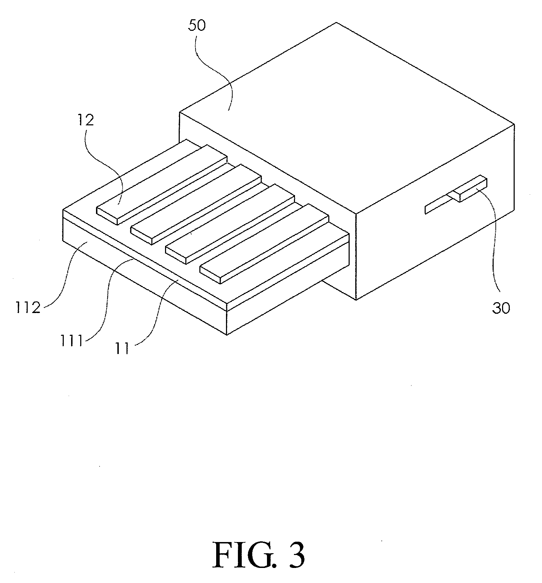

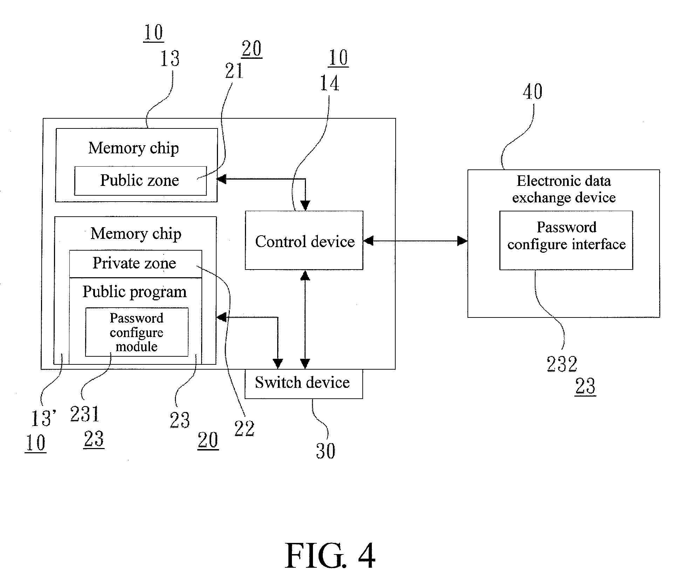

With reference to FIG. 3 which illustrates the perspective view for the present invention of an encryption flash disk identical in the first and the second embodiments, the second embodiment of the present invention is referred to FIGS. 3 and 4 illustrating an encryption flash disk's similar components which have been interpreted in the first embodiment (FIGS. 1, 2, and 3), marked with identical symbols in FIGS. 3 and 4, and thus not described again. Referring to FIGS. 3 and 4 which illustrate a difference between the second embodiment and the first embodiment is two memory chips (13, 13') on the memory module (10) wherein the public zone (21) and the private zone (22) (along with the public program (23)) of the encryption system (20) are installed in the memory chip (13) and the memory chip (13'), respectively. The switch device (30) is electrically connected to the private zone (22) of the memory chip (13'). Accordingly, the switch device (30) configured to the "OFF" status in this embodiment is able to disconnect electric signals of the private zone (22) in practice, and thus a user is allowed to access, delete, add, or modify digital data in the public zone (21) only. On the contrary, because electric signals of the private zone (22) are enabled by the switch device (30) configured to the "ON" status, the control device (14) subject to the "ON" command displays the password configure interface (232) on an electronic data exchange device via the password configure module (231) of the public program (23), and a user's correct password enables the private zone (22) in which a user is able to access, delete, add, or modify digital data.

Still, all components' electrical connections interpreted in the present invention are not limited in the first or the second embodiment, but all changes equivalent to the present invention are included in claims of the present invention.

With the above descriptions summarized, the present invention which comprises a memory module, an encryption system, and a switch device and encrypts / accesses digital data via an operating system is capable of keeping digital data secret and safe without worry about potential exposure of digital data in one data disk held by another person. Therefore, the present invention different from general conventional flash disks but regarded as creative work meets patentability and is applied for the patent.

The foregoing disclosure and description are illustrative and explanatory of preferred embodiments only and therefore any equivalent change in the instruction, claims, or drawings of the present invention does not depart from claims of the present invention.

## Claims

1. An encryption flash disk for digital data encrypted and accessed via an operating system, comprising:
A memory module (10) with a substrate (11) and a plurality of metal contacts (12) wherein the substrate (11) accommodates an inner surface (111) provided with a memory chip (13) and a control device (14) at least and the metal contacts (12) are electrically connected to the memory chip (13) and the control device (14) via the substrate (11);
An encryption system (20) which is installed in the memory chip (13) electrically connected to the control device (14), comprising:
A public zone (21) at least for storage of public digital data;
A private zone (22) at least for storage of private digital data;
A public program (23) with a password configure module (231) to configure, input, and clear a password;
A switch device (30) electrically connected to the control device (14) of the memory module (13).

2. The encryption flash disk according to Claim 1 wherein the switch device (30) is electrically connected to the private zone (22) of the memory chip (13).

3. The encryption flash disk according to Claim 1 wherein the password configure module (231) is exported to an electronic data exchange device (40) via a password configure interface (232).

4. The combinational encryption flash disk according to Claim 1 wherein the metal contacts (12) are compatible to one of the following data transfer interfaces at least such as Universal Serial Bus (USB), Mini Universal Serial Bus (Mini USB), Micro Universal Serial Bus (Micro USB), or External Serial Advanced Technology Attachment (e-SATA).

5. The combinational encryption flash disk according to Claim 1 wherein the inner surface (111) of the substrate (11) forms an electronics body (112) encasing the memory chip (13) and the control device (14).

6. The combinational encryption flash disk according to Claim 1 wherein the memory module (10) is accommodated in a case (50) with the metal contacts (12) exposed and the switch device (30) is installed on one side of the case (50).
